# FASCICULE DE BREVET EUROPEEN

(11) **EP 0 669 345 B1**
(45) Date de publication et mention de la délivrance du brevet: **02.08.2000**
(21) Numéro de dépôt: 95870016.3
(22) Date de dépôt: 23.02.1995
(51) Int. Cl.: C08F 6/02

(54) **Procédé de traitement de polymères du type vinylaromatique-diène conjugué**
Verfahren zum Behandeln von Polymeren aus vinylaromatischen Verbindungen und konjugierten Dienen
Process for the treatment of polymers of the vinylaromatic-conjugated diene type

(30) Priorité: 24.02.1994 EP 94870036
(43) Date de publication de la demande: 30.08.1995
(73) Titulaire: FINA RESEARCH S.A., B-7181 Seneffe (Feluy) (BE)
(72) Inventeur: Lanza, Emmanuel, B-1410 Waterloo (BE); Naveau, Jean, B-1400 Nivelles (BE)

(56) Documents cités:
- EP-A- 0 479 754
- CHEMICAL ABSTRACTS, vol. 111, no. 24, 11 Décembre 1989 Columbus, Ohio, US; abstract no. 215165, SHIRAKI ET AL. 'MANUFACTURE OF HEAT DISCOLORATION-RESISTANT MODIFIED POLYMERS WITH GOOD COLOR TONES AND TRANSPARENCY' & JP-A-01 135 801 (ASAHI CHEM. IND.) 29 Mai 1989

## Description

La présente invention se rapporte à un procédé de traitement de copolymères du type copolymère bloc vinylaromatique-diène conjugué. En particulier, la présente invention se rapporte à un procédé de traitement de tels copolymères obtenus au départ d'une étape d'initiation de la (co)polymérisation effectuée au moyen de catalyseurs à base de métal alcalin (Me).

Le brevet français n° 1.149.159 décrit un procédé pour enlever la couleur foncée due aux catalyseurs d'hydrogénation des polymères caoutchouteux hydrogénés au moyen d'un acide minéral ou d'un acide mono ou polycarboxylique; il en résulte des polymères transparents mais jaunâtres. De plus, on a remarqué que les polymères décolorés avec ce procédé présentent une tendance significative à absorber de l'eau, ce qui a pour conséquence d'accroître leur opacité au fil du temps.

Le brevet européen n° 479754 décrit un procédé de décoloration de polymères résineux du type vinylaromatique-diène conjugué consistant à traiter ces copolymères au moyen d'un acide monocarboxylique ayant de 3 à 5 atomes de carbone.

Or, en ce qui concerne les copolymères de types résineux, notamment ceux décrits dans les brevets US 3.639.517 et 4.091.053, la coloration est principalement due aux agents d'initiation. Il est très important, non seulement pour l'aspect, mais aussi pour des utilisations dans le domaine alimentaire, de faire disparaître cette coloration jaunâtre, et d'obtenir des copolymères parfaitement transparents et incolores.

On connaît des méthodes pour obtenir des copolymères transparents en traitant les solutions de copolymères avec du CO₂ et de l'eau. Par exemple, JP-A-01135801 décrit un tel procédé. Cependant, cela nécessite une distillation du solvant pour le séparer de l'eau et du CO₂ avant qu'il ne soit recyclé pour la polymérisation, car ces produits agiraient sinon comme poisons pour l'initiateur.

De plus, il faut penser qu'en plus de la transparence et de la décoloration, il faut maintenir au copolymère toutes ses propriétés mécaniques de résistance au choc, ce qui n'est pas toujours assuré par les solutions préconisées.

On a également proposé dans le brevet EP 84.795 de traiter les copolymères avec des diacides carboxyliques. Ce type de procédé permet de satisfaire pratiquement toutes les conditions de décoloration et de stabilité des propriétés mécaniques énoncées ci-dessus, mais sans apporter la solution au problème de l'absorption d'eau mentionné ci-dessus.

Il serait donc souhaitable de disposer d'un procédé pour traiter les copolymères vinylaromatique-diène conjugué de manière à leur assurer la transparence parfaite, à leur maintenir des propriétés de résistance au choc appropriées, à permettre le contact avec les matières alimentaires et à améliorer leur résistance à l'absorption d'eau.

La présente invention a pour objet un procédé de traitement des copolymères de type vinylaromatique-diène conjugué de manière à satisfaire aux critères énoncés ci-dessus.

La présente invention a pour objet un procédé de traitement de copolymères vinylaromatique-diène conjugué qui permette d'obtenir des copolymères parfaitement transparents.

La présente invention a également pour objet un procédé de traitement de copolymères vinylaromatique-diène conjugué qui permet d'obtenir des copolymères ayant de bonnes propriétés de résistance au choc.

La présente invention a également pour objet un procédé de traitement de copolymères vinylaromatique-diène conjugué qui permet leur utilisation dans le domaine alimentaire.

La présente invention a également pour objet un procédé de traitement de copolymères vinylaromatique-diène conjugué qui permet de réduire considérablement leur tendance à absorber l'eau.

La présente invention a également pour objet un procédé de traitement de copolymères vinylaromatique-diène conjugué qui permet une mise en oeuvre aisée des copolymères.

La présente invention se rapporte à un procédé tel que décrit dans la revendication 1.

La terminaison de type alcoolate de métal alcalin (O-Me) des copolymères traités suivant la présente invention peut être obtenue par utilisation d'agents de couplage désactivants oxygénés, qui conduisent à ce type de terminaison. La terminaison de type alcoolate de métal alcalin (O-Me) des copolymères traités suivant la présente invention peut également être obtenue, après que la polymérisation ait eu lieu, par addition d'un agent de terminaison approprié tel que, par exemple, les composés de type époxyde, cétone ou aldéhyde.

Le procédé de la présente invention est applicable aux copolymères aussi bien de type résineux que de type élastomérique préparés par polymérisation anionique en solution de monomères vinylaromatiques et de diène conjugué, en présence d'initiateurs de type composé de métal alcalin, le copolymère obtenu est désactivé de manière à présenter une terminaison de type (-O-Me).

La polymérisation s'effectue généralement en solution en présence d'un solvant et d'un initiateur de type composé de métal alcalin. En plus on peut ajouter un agent de couplage de manière à coupler les copolymères.

Les copolymères ainsi formés se trouvent le plus souvent sous forme linéaire ou radiale, mais d'une coloration inacceptable pour les utilisations désirées.

Les procédés de polymérisation pour obtenir les copolymères que l'on traite avec le procédé de l'invention sont parfaitement décrits dans les brevets US 3.639.517 et 4.091.053 et dans les brevets EP 84.795 et 270.515. Ces procédés de polymérisation peuvent d'ailleurs être facilement illustrés de la manière suivante.

On effectue la polymérisation en solution à une température comprise entre - 100°C et + 150°C, en présence d'un solvant et à une pression suffisante pour maintenir le milieu en phase liquide. Les solvants utilisés peuvent être paraffiniques, cycloparaffiniques ou aromatiques. Le plus souvent, on utilise du cyclohexane ou un mélange d'hexane et de cyclohexane.

On forme un copolymère bloc séquencé en chargeant initialement un des deux monomères vinylaromatique (S), diène conjugé (B) ou un mélange de ces deux monomères avec une certaine quantité d'initiateur organolithium afin d'amorcer la polymérisation et pour former ainsi des chaînes de polymères vivants ayant un atome terminal de lithium sur la chaîne. On introduit ensuite successivement et dans l'ordre désiré une ou plusieurs charges d'un des monomères S ou B ou d'un des mélanges de ces deux monomères.

Dans le cas d'une polymérisation effectuée au moyen d'agents de couplage, les copolymères sont mis en contact avec des agents de couplage particuliers pour former des copolymères qui sont désactivés et présentent une terminaison de type (O-Me).

Dans le cas d'une polymerisation effectuée sans agent de couplage, on traite de préférence le copolymère résultant au moyen d'un composé époxydé afin d'obtenir un copolymère désactivé et terminé par une liaison de type (-O-Me).

Il est entendu que l'on peut former des copolymères à structure radiale ou linéaire, et que les blocs peuvent être formés d'homopolymères purs ou de copolymères statistiques.

Quels que soient les copolymères obtenus selon les divers procédés de polymérisation anionique en solution, le procédé de l'invention est applicable pour décolorer ces copolymères.

Comme monomère de diène conjugué, on peut utiliser ceux ayant de 4 à 12 atomes de carbone, comme le 1,3-butadiène, l'isoprène, le 2,3- diméthyl-1,3 butadiène, le piperylène, le 3-butyl-1,3-octadiène.

Comme monomère vinylaromatique, on peut utiliser le styrène, les styrènes substitués tels que le alpha-méthylstyrène ou le para-méthylstyrène, le vinylnaphtalène, le vinytoluène.

Comme le procédé s'applique aussi bien aux copolymères résineux qu'aux élastomériques, le rapport pondéral diène conjugué/vinyl aromatique peut varier dans de larges limites et notamment de 1/99 à 85/15. De préférence, le rapport pondéral diène conjugué/vinyl aromatique est compris entre 15/85 et 65/35.

Les initiateurs de type composé de métal alcalin qui peuvent être utilisés comprennent de préférence les composés organolithiques suivants : l'éthyllithium, le propyllithium, le n-butyllithium, l'amyllithium, l'hexyllithium, le cyclohexyllithium, le phényllithium, le toluyllithium, le naphtyllithium et leurs isomères en particulier le sec-butyllithium et le tert-butyllithium.

Lorsque la polymérisation est effectuée avec des agents de couplage, ces derniers sont choisis de manière à obtenir des copolymères présentant une terminaison de type (-O-Me). Comme exemples d'agents de couplage, on peut citer les polyaldéhydes, les polycétones, les multiesters, les multianhydrides et les polyépoxydés.

De préférence, on utilise les agents de couplage polyépoxydés. De préférence, on utilise des polymères d'hydrocarbures époxydés comme le polybutadiène liquide époxydé et les huiles végétales époxydées comme l'huile de soja époxydée et l'huile de lin époxydée. On peut aussi utiliser d'autres composés époxy comme le 1,2;5,6;9,10-triépoxydécane.

Comme exemples de polyaldéhydes on peut citer le 1,4,7-naphtalènetricarboxaldéhyde, le 1,7,9-anthracène - tricarboxaldéhyde, le 1,1,5-pentanetricarboxaldéhyde.

Comme polycétones, on peut citer le 1,4,9,10-anthracènetétrone, le 2,3-diacétonylcyclohexane.

Des exemples de multiesters comprennent les diéthyladipate, triéthylcitrate, 1,3,5-tricarbéthoxybenzène.

Des exemples de composés ayant plus d'un type de groupe fonctionnel comprennent le 1,2;4,5-diépoxy-3-pentanone, le 1,2;4,5-diépoxy-3-hexanone, le 1,2;11,12-diépoxy-8-pentadécanone, le 1,3;18,19-diépoxy-7,14-eicosanedione.

Lorsque l'on désire un polymère couplé linéaire plutôt qu'un polymère branché, on utilise un agent de couplage difonctionnel. Bien que le procédé de la présente invention s'applique aussi bien aux copolymères couplés qu'aux copolymères non couplés linéaires, on utilise préférentiellement le procédé de l'invention pour traiter ces derniers.

Généralement, la quantité totale d'agent de couplage est inférieure à 1,5 phr (parties par 100 parties de caoutchouc).

Il est également bien compris que l'on peut utiliser un agent de couplage non désactivant et ensuite désactiver le copolymère résultant au moyen d'un agent de terminaison (par exemple un composé époxydé, cétone ou aldéhyde) sans pour autant sortir du cadre de la présente invention.

Les composés époxydés servant à désactiver les copolymères peuvent être choisis parmi les composés suivants : oxyde d'éthylène, oxyde de propylène, 1,2-époxybutane, 1,2-époxypentane, 1,2-époxy-3-méthylbutane, 2,3-époxy-3-méthylbutane, 1,2-époxy-2,4,4-triméthylpentane, 1,2-époxycyclohexane, 1,2-époxycyclooctane,1,2-époxyeicosane, oxyde de styrène, 1,2-époxytriacontane, 1,2-époxy-2-cyclohexylbutane, 3,4-époxy-3,4-diéthylhexane, 1,2-époxy-2-(para-tolyl)butane, 2,3-époxy-3-méthyl-2-benzylpentane, et analogues. On utilise de préférence l'oxyde de propylène.

Selon le procédé de l'invention, on traite les copolymères vinylaromatique-diène conjugué désactivés avec un anhydride cyclique d'acide polycarboxylique.

Le procédé de l'invention est applicable d'une manière très avantageuse lorsque le procédé de récupération du copolymère est basé sur une élimination directe du solvant.

On peut évidemment enlever une partie du solvant de polymérisation avant de traiter le polymère selon le procédé de l'invention.

Ainsi, selon un mode d'exécution du procédé de l'invention, on traite le polymère avec un anhydride cyclique d'acide polycarboxylique.

A titre d'exemple de tels anhydrides, on peut citer notamment les anhydrides succinique, méthylsuccinique, éthylsuccinique, n-propylsuccinique, iso-propylsuccinique, 2,2-diméthylsuccinique, 2,2-diéthylsuccinique, dl-2,3-diméthylsuccinique, dl-2,3-diéthylsuccinique, triméthylsuccinique, tétraméthylsuccinique, tétraéthylsuccinique, octénylsuccinique, n-décylsuccinique, 2-dodécen-1-ylsuccinique, n-dodécylsuccinique, tétradécylsuccinique, octadécylsuccinique, 2,3-diacétylsuccinique (diacéthyl-L-tartaric), itaconique (2-méthylènesuccinique), maléique, citraconique (méthylmaléique), diméthylmaléique, diéthylmaléique, diisopropylmaléique, glutarique, 2-méthylglutarique, 2-éthylglutarique, 3-méthylglutarique, 3-éthylglutarique, 3-éthyl-3-méthylglutarique, dl-2,4-diméthylglutarique, dl-2,4-diéthylglutarique, 3,3-diméthylglutarique, 3,3-diéthylglutarique, 3,3-tétraméthylèneglutarique, dl-2-chloroglutarique, hexafluoroglutarique, diglycolique (1,4-dioxacyclohexane-2,6-dione), 3,5-diacéthyltétrahydropyran-2,4,6-trione, 1,2-cyclopropane dicarboxylique, 1,2-cyclobutane dicarboxylique, cis-1,3-cyclobutane dicarboxylique, cis-1,3-cyclopentane dicarboxylique, 1-cyclopentène-1,2-dicarboxylique, cis-1,2-cycloheptane dicarboxylique, trans-1,2-cycloheptane dicarboxylique, phtalique, 3-méthylphtalique, 4-méthylphtalique, homophtalique, 3,6-dichlorophtalique, 4,5-dichlorophtalique, tétrachlorophtalique, 3,4,5,6-tétrahydrophtalique (cyclohexene dicarboxylique), cis-1,2,3,6-tétrahydrophtalique (cyclohexene dicarboxylique), méthyltétrahydrophtalique, cis-1,2-cyclohexane dicarboxylique (hexahydrophtalique), trans-1,2-cyclohexane dicarboxylique (hexahydrophtalique), cis-1,3-cyclohexane dicarboxylique, cis-1,4-cyclohexane dicarboxylique, hexahydro-4-méthylphtalique (cis, trans et mélanges), 2-norbornene-2,3-dicarboxylique, méthyl-5-norbornene-2,3-dicarboxylique, 1,4,5,6,7,7-hexachloro-5-norbornene-2,3-dicarboxylique, dl-camphorique, cinéolique, 1,2,4-benzenetricarboxylique (trimellitique), 1,8-naphtalique (naphtalène-1,8-dicarboxylique), diphénique (diphényl-2,2'-dicarboxylique), 2,3-pyridinedicarboxylique, 3,4-pyridinedicarboxylique.
On peut également citer les dianhydrides pyromellitique, oxy-diphtalique, sulfone di-phtalique, 3,3',4,4'-benzophénone tétracarboxylique (4,4'-carbonyl diphtalique), 5-(2,4-dioxotétrahydro-3-furanméthyl)-5-norbornène-2,3-dicarboxylique, 5-(2,4-dioxotétrahydro-3-furanméthyl)-5-norbornane-2,3-dicarboxylique, cis,cis,cis,cis,1,2,3,4-cyclopentanetétracarboxylique, 1,2,3,4-cyclobutanetétracarboxylique, éthylène glycol(di-trimellitate) dicarboxylique.

Selon un mode préféré d'exécution de la présente invention on utilise les anhydrides cycliques d'acides dicarboxyliques.

De préférence, on utilise les anhydrides succinique, maléique, glutarique ou phtalique. Parmi ceux-ci, on utilise de préférence l'anhydride hexahydro-4-méthylphtalique et l'anhydride glutarique.

Selon un autre mode d'exécution de la présente invention, on a également trouvé que l'on pouvait avantageusement combiner l'usage de ces anhydrides avec des acides monocarboxyliques ayant de 2 à 4 atomes de carbone, de préférence l'acide propionique.

Les mélanges d'anhydride et d'acide monocarboxylique peuvent comprendre jusqu'à 50% en poids d'acide monocarboxylique. De préférence, ces mélanges comprennent jusqu'à 40% en poids d'acide monocarboxylique.

La quantité d'anhydride ou de mélange d'anhydride et d'acide monocarboxylique à mettre en oeuvre est de préférence comprise entre 0,1 et 0,5 parties pour 100 parties de polymère.

Selon le procédé de la présente invention on peut ajouter à la solution de polymère les anhydrides seuls ou en mélange entre eux soit en mélange avec un solvant soit sous forme fondue. Lorsque l'on ajoute un acide monocarboxylique, il peut être ajouté en même temps que l'anhydride ou, de préférence, juste avant.

Les exemples suivants sont donnés afin de mieux illustrer le procédé de la présente invention, mais sans pour autant en limiter la portée.

### Exemples

On a préparé un copolymère de type S₁-B₁-B/S-S₂ ayant un rapport pondéral styrène-butadiène de 73/27.

On introduit dans un réacteur pressurisé les quantités suivantes calculées pour 100 parties en poids de monomères de styrène et de 1,3-butadiène.

On a ainsi introduit d'abord 471 parts d'un mélange solvant constitué de 85% de cyclohexane et de 15% de n-hexane.

On a introduit ensuite du THF à raison de 0,05 phr et le styrène monomère à raison de 16,7 parts.

A ce moment la température du milieu réactionnel est portée à 65°C et on injecte du n-butyllithium sous forme d'une solution à 20% dans le cyclohexane de manière à disposer de 0,083 phr dans le milieu.

On a ensuite poursuivi la polymérisation séquencée en injectant simultanément 25 parts de 1,3-butadiène et 58,3 parts de styrène. Le polymère vivant ainsi formé est désactivé par addition de 0,075 phr d'oxyde de propylène.

On introduit ensuite l'anhydride cyclique ou le mélange anhydride cyclique/acide monocarboxylique comme indiqué dans le tableau 1 ci-après ainsi qu'un système antioxydant constituté de 0,4 phr d'Irganox 1076 (marque déposée de Ciba-Geigy; Octadécyl 3,5-di-tert-butyl-4-hydroxyhydrocinnamate) et 0,7 phr de TNPP (Tri-nonylphénylphosphite). L'apparence de la solution obtenue à la fin de cette étape est indiquée dans le tableau 1.

Les solutions de polymères ainsi obtenues sont désolvantisées par traitement au roll mill à 160°C pendant 40 minutes. Les matériaux sont ensuite moulés par compression à 150°C (40kg/cm²) sous forme de plaques de 2mm d'épaisseur destinées à la détermination des propriétés optiques.

Dans le tableau 1, les plaques ont subi un vieillissement à température ambiante de 24 heures. La transmittance et l'indice d'opacité ont été mesurés suivant la norme ASTM D 1003, l'indice de jaune suivant la norme ASTM D 1925.

Dans le tableau 2, on a effectué une détermination visuelle de l'apparence des plaques après 24 heures de vieillissement à température ambiante
a) en phase vapeur exempte d'eau
b) immergées sous 1cm d'eau désionisée.

Dans le tableau 3, on a évalué la tendance à absorber l'eau au départ de plaques de 1mm d'épaisseur, obtenues comme décrit ci-dessus, soumises à une humidité relative de 75% obtenue dans un récipient fermé, à l'aide d'un système NaCl-H₂O, à 25°C.

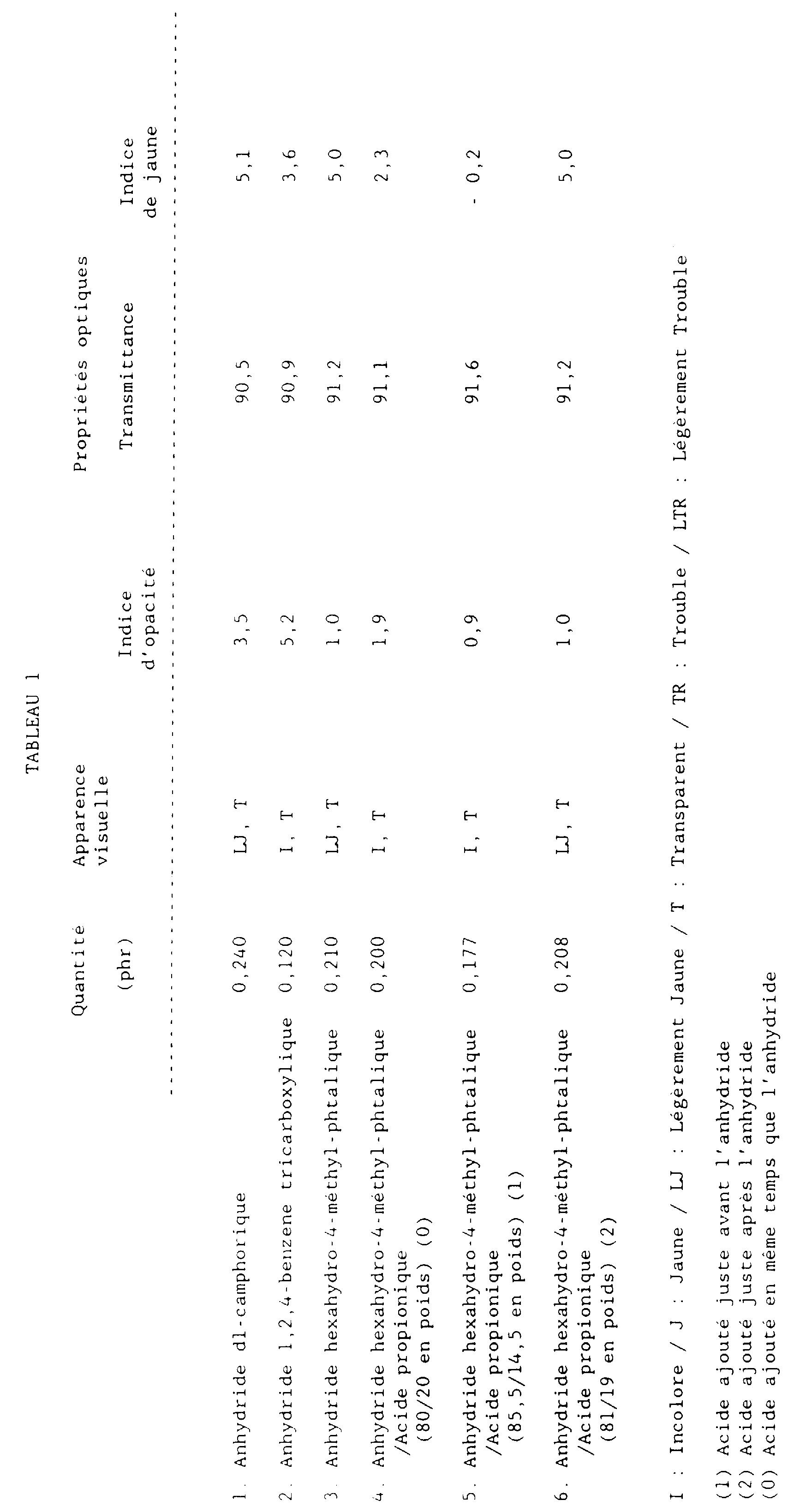

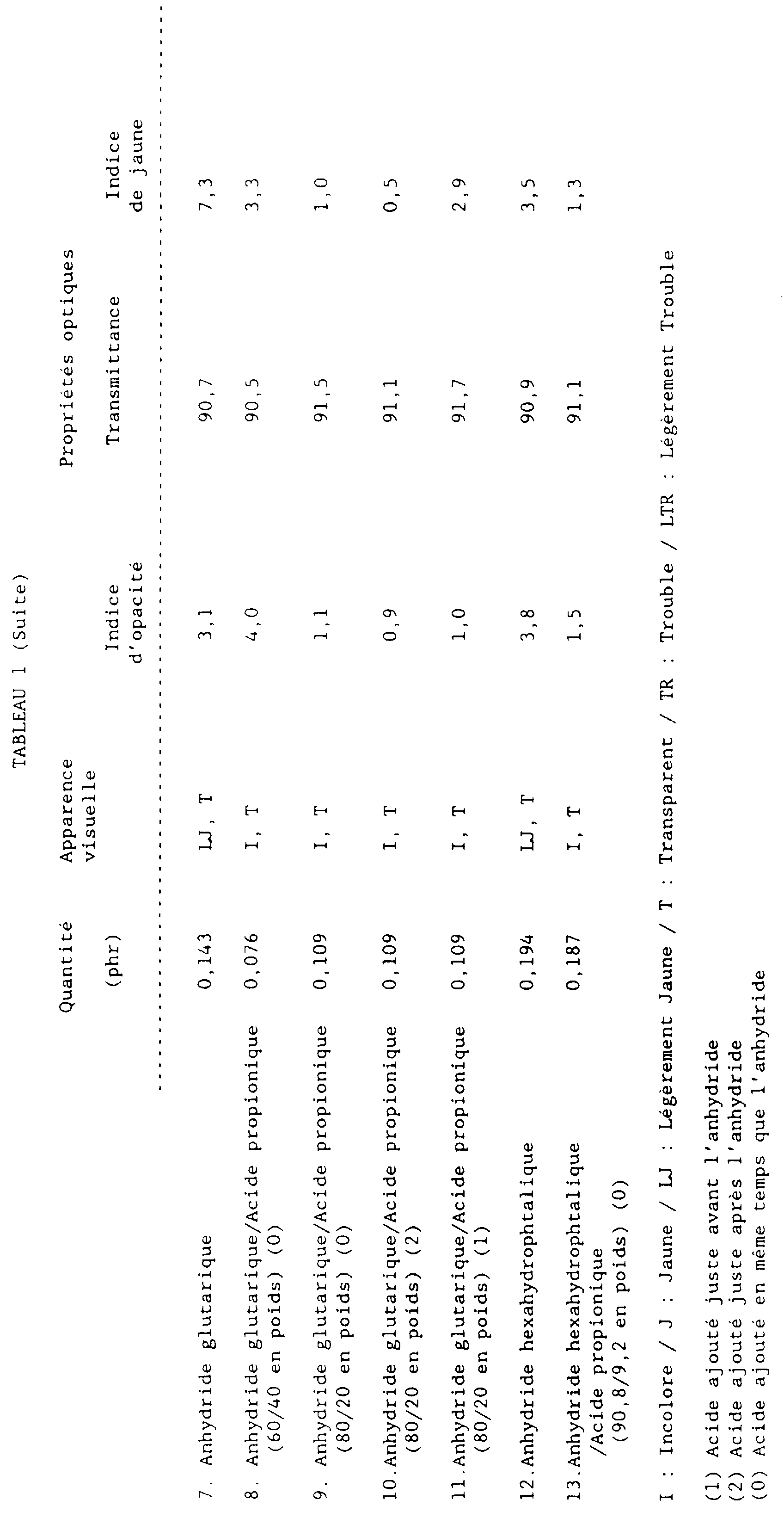

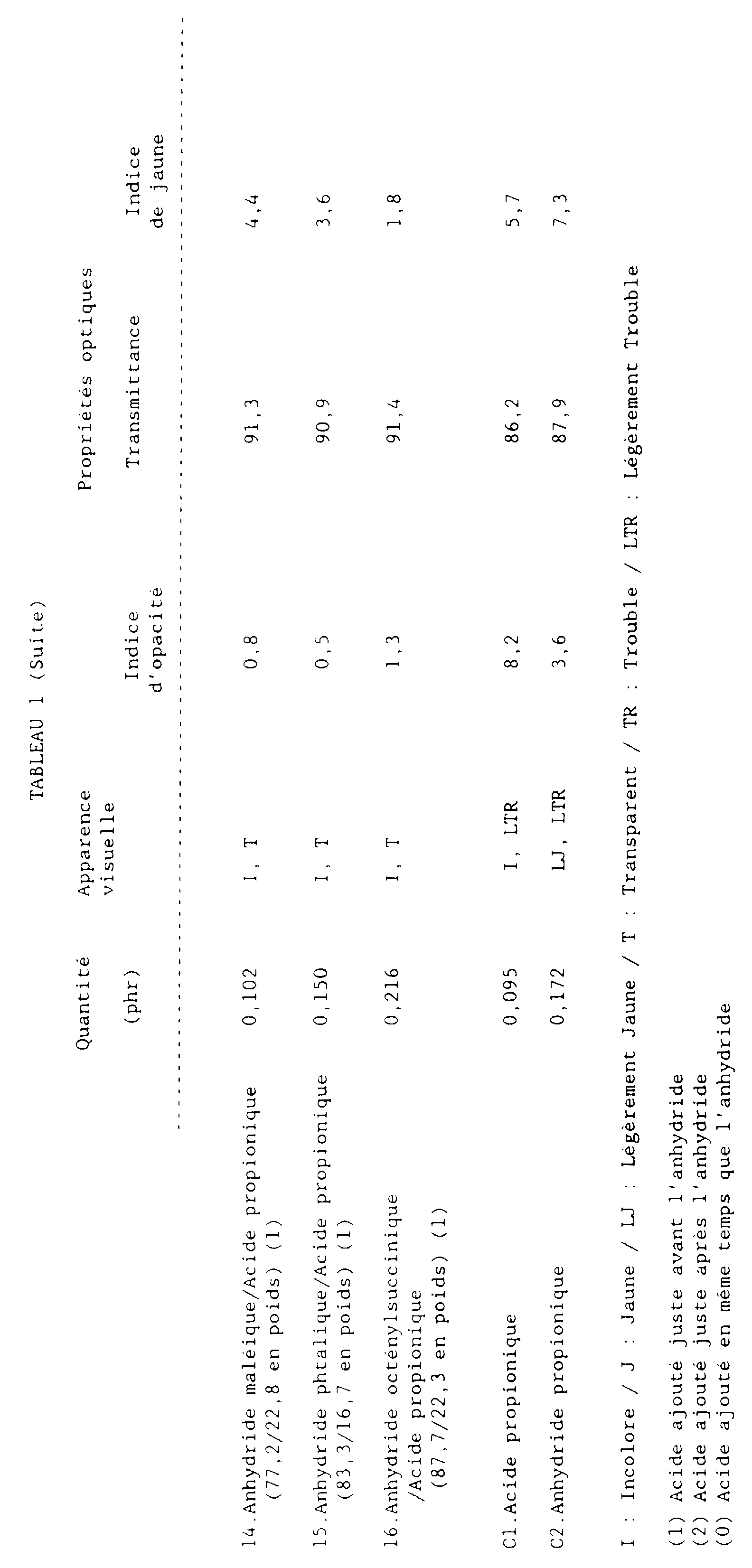

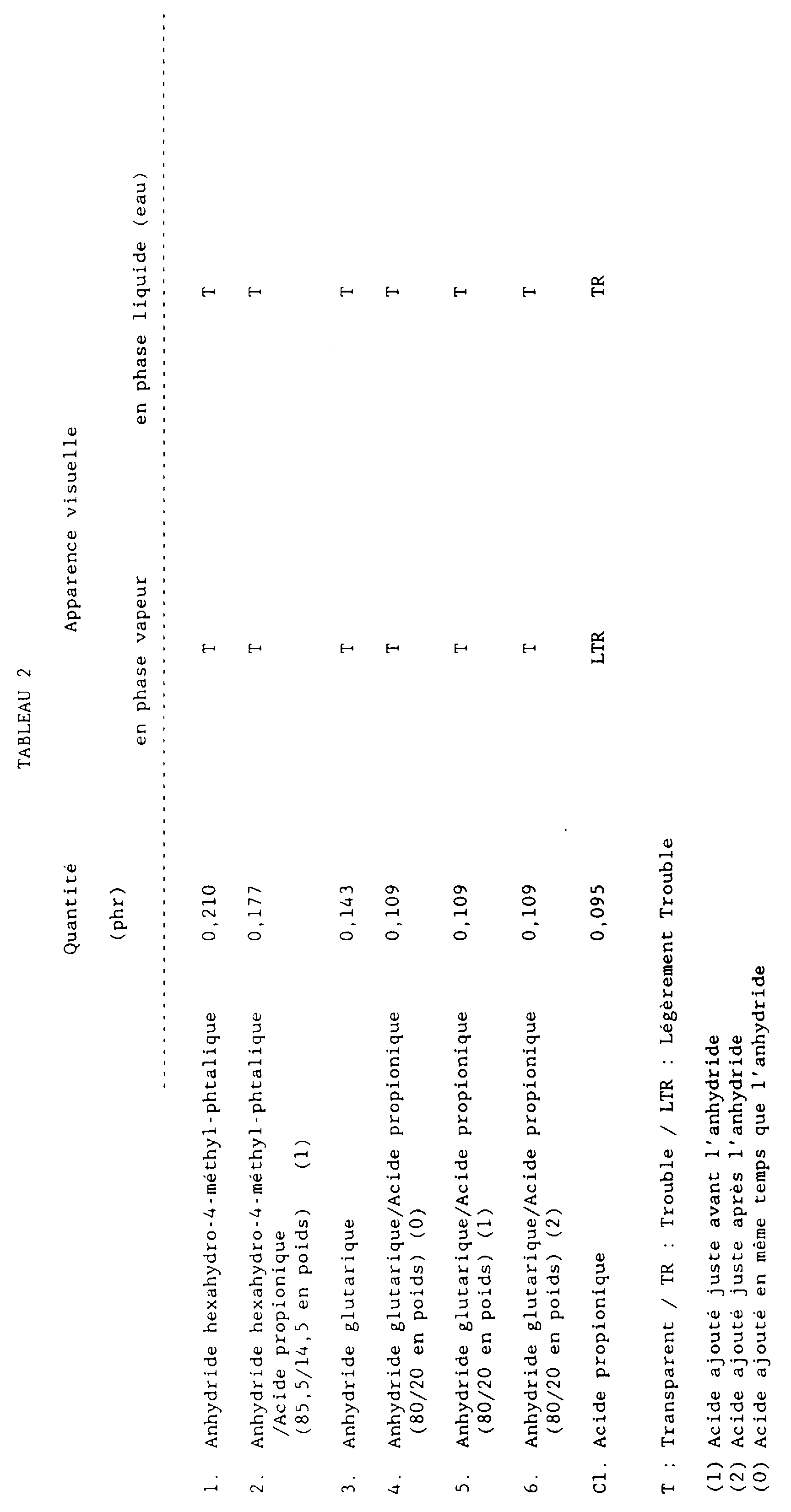

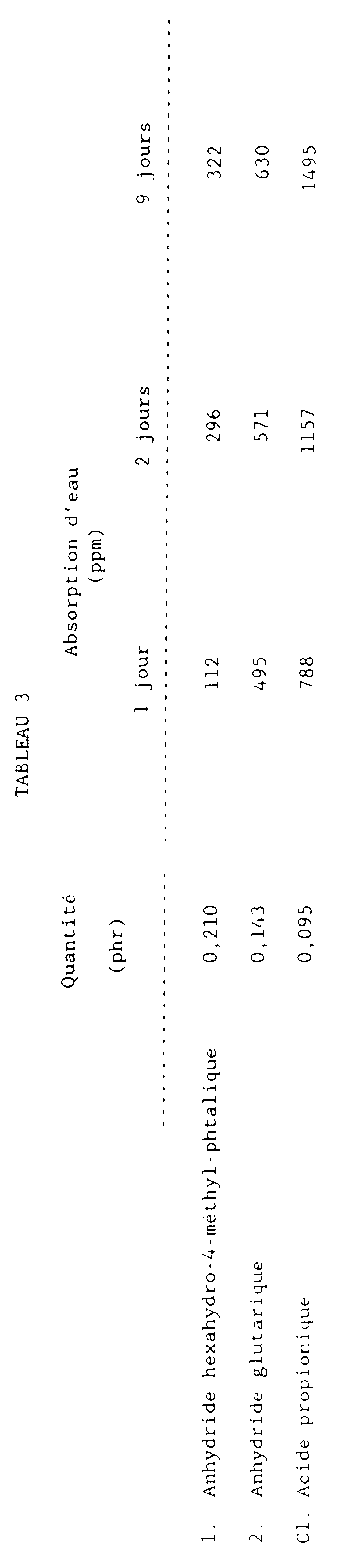

## Revendications

1. Procédé de traitement de copolymères blocs vinylaromatique-diène conjugué obtenus par polymérisation anionique en solution avec des catalyseurs à base de métal alcalin (Me) lors de l'étape d'initiation et puis désactivés de manière à présenter une terminaison de type alcoolate de métal alcalin (-O-Me) caractérisé en ce qu'on traite le copolymère désactivé avec :
(a) de 0,02 à 2 parties pour 100 parties de polymère d'au moins un anhydride cyclique d'acide polycarboxylique, ou
(b) un mélange d'un anhydride cyclique d'acide polycarboxylique avec un acide monocarboxylique ayant de 2 à 4 atomes de carbone, le mélange pouvant comprendre jusqu'à 50% en poids d'acide monocarboxylique et la quantité du mélange à mettre en oeuvre étant comprise entre 0,02 et 2,0 parties pour 100 parties de polymère,
et qu'ensuite on récupère le copolymère ainsi traité.

2. Procédé selon la revendication 1 caractérisé en ce qu'on traite le copolymère avec un anhydride cyclique d'acide dicarboxylique.

3. Procédé selon la revendication 2 caractérisé en ce qu'on traite le copolymère avec de l'anhydride succinique, maléique, glutarique ou phtalique.

4. Procédé selon la revendication 3 caractérisé en ce qu'on traite le copolymère avec un anhydride hexahydro-4-méthylphtalique ou glutarique.

5. Procédé selon l'une quelconque des revendications précédentes caractérisé en ce que la quantité (a) d'anhydride cyclique ou (b) de mélange anhydride cyclique et d'acide monocarboxylique est comprise entre 0,1 et 0,5 parties pour 100 parties de polymère.

6. Procédé selon la revendication 5 caractérisé en ce que l'acide monocarboxylique est ajouté juste avant l'addition d'anhydride cyclique.

## Claims

1. Method of treating conjugated vinylaromatic-diene block copolymers obtained by anionic polymerisation in solution with catalysts based on alkaline metal (Me) during the initiation stage and then deactivated so as to have a termination of the type alcoholate of alkaline metal (-O-Me) **characterised in that** the deactivated copolymer is treated with :
(a) from 0.02 to 2 parts per 100 parts of polymer of at least one cyclic anhydride of polycarboxylic acid, or
(b) a mixture of a cyclic anhydride of polycarboxylic acid with a monocarboxylic acid having from 2 to 4 carbon atoms, the mixture being able to include up to 50% by weight of monocarboxylic acid and the quantity of the mixture to be used being between 0.02 and 2 parts per 100 parts of polymer,
and the copolymer thus treated is then recovered.

2. Method according to claim 1, **characterised in that** the copolymer is treated with a cyclic anhydride of dicarboxylic acid.

3. Method according to claim 2, **characterised in that** the copolymer is treated with succinic, maleic, glutaric or phthalic anhydride.

4. Method according to claim 3, **characterised in that** the copolymer is treated with a hexahydro-4-methylphthalic or glutaric anhydride.

5. Method according to any one of the preceding claims, **characterised in that** the quantity (a) of cyclic anhydride or (b) of cyclic anhydride and monocarboxylic acid mixture is between 0.1 and 0.5 parts per 100 parts of polymer.

6. Method according to claim 5, **characterised in that** the monocarboxylic acid is added just before the cyclic anhydride is added.

## Patentansprüche

1. Verfahren zur Behandlung von Copolymerblöcken von konjugiertem Vinylaromat-Dien, erhalten durch anionische Polymerisation in Lösung mit Katalysatoren auf Basis Alkalimetall (Me) während der Stufe der Initiierung und dann desaktiviert auf eine Weise, daß eine Endgruppe vom Typ von Alkoholat von Alkalimetall (-O-Me) gezeigt wird, dadurch gekennzeichnet, daß man das desaktivierte Copolymer behandelt mit :
(a) 0,02 bis 2 Teile pro 100 Teile Polymer mindestens eines zyklischen Anhydrids von Polycarbonsäure oder
(b) einer Mischung eines zyklischen Anhydrids von Polycarbonsäure mit einer Monocarbonsäure mit 2 bis 4 Kohlenstoffatomen, wobei die Mischung bis 50 Gew.% Monocarbonsäure enthalten kann, und die Menge von einzusetzender Mischung zwischen 0,02 und 2,0 Teile pro 100 Teile Polymer enthalten ist,
und daß man dann anschließend das so behandelte Copolymer gewinnt.

2. Verfahren nach Anspruch 1, dadurch gekennzeichnet, daß man das Copolymer mit einem zyklischen Anhydrid von Dicarbonsäure behandelt.

3. Verfahren nach Anspruch 2, dadurch gekennzeichnet, daß man das Copolymer mit Succinsäureanhydrid, Maleinsäureanhydrid, Glutarsäureanhydrid oder Phthalsäureanhydrid behandelt.

4. Verfahren nach Anspruch 3, dadurch gekennzeichnet, daß man das Copolymer mit einem Anhydrid von Hexahydro-4-methylphthahlsäure oder Glutarsäure behandelt.

5. Verfahren nach einem der vorhergehenden Ansprüche, dadurch gekennzeichnet, daß die Menge (a) von zyklischem Anhydrid oder (b) von Mischung von zyklischem Anhydrid und Monocarbonsäure zwischen 0,1 und 0,5 Teile pro 100 Teile Polymer enthalten ist.

6. Verfahren nach Anspruch 5, dadurch gekennzeichnet, daß die Monocarbonsäure gerade vor Zugabe von zyklischem Anhydrid hinzugegeben wird.
